# EUROPEAN PATENT APPLICATION

(11) **EP 4 800 157 A1**
(43) Date of publication of application: **02.09.2026**
(21) Application number: 25160453.4
(22) Date of filing: 27.02.2025
(51) Int. Cl.: C25B 1/04, C25B 9/70, C25B 15/00

(54) **METHOD OF OPERATING AN ELECTROLYSIS SYSTEM, CONTROL UNIT TO CONTROL AN ELECTROLYSIS SYSTEM, ELECTROLYSIS SYSTEM WITH SUCH A CONTROL UNIT COMPUTER PROGRAM PRODUCT AND A COMPUTER-READABLE STORAGE MEDIUM**

(71) Applicant: Siemens Energy Global GmbH & Co. KG, 81739 München (DE)
(72) Inventor: Aubermann, Manfred, 90478 Nürnberg (DE); Buratckii, Artem, 90459 Nürnberg (DE); Loku, Fisnik, 90439 Nürnberg (DE); Thakur, Faisal, 91052 Erlangen (DE)

(57) **Abstract**

Method of operating an electrolysis system (2) wherein the method comprising the step of:
(S100) providing a control signal (S5) to a product valve (18b) on the oxygen-side (V) of the electrolysis system (2) to keep the product valve (18b) open in order to buffer oxygen provided by the electrolysis system (2) in a buffer tank (14b) on the oxygen-side (V) in normal operation of the electrolysis system (2).

## Description

The present disclosure in general relates to a method of operating an electrolysis system, a control unit to control such an electrolysis system, and an electrolysis system with such a control unit Further, the present disclosure relates to a computer program product and a computer-readable storage medium.

Electrolysis is a process used for producing hydrogen by using electricity to split water into hydrogen and oxygen. Green hydrogen production, i.e., the production of hydrogen using renewable energy, such as electrical energy generated using wind turbines or photovoltaic systems, is increasing due to efforts to de-carbonize energy production. Therefore, the number of installed electrolysis systems connected to transmission networks for electrical energy, e.g., alternating current (AC) power grids, continuously increases. Some electrolysis systems are connected to renewable energy sources via medium voltage links.

Connecting large electrolysis systems to the public grid requires compliance with/the fulfilment of the local grid code requirements. Part of these requirements - especially for large electrolysis systems - is a fault ride through capability. The typical core requirement is to remain fully connected to the grid in case of a temporary voltage dip at the point of connection. The grid operator specifies a curve where the voltage dip is time dependently shown, during which the electrolysis system must remain connected. Longer or deeper voltage dips allow a disconnection of the electrolysis system.

Important for the grid operator is the availability of the load after the fault is cleared, so-called post-fault recovery behaviour. Should a large electrolysis system trip in case of short time disturbances within the grid, the grid operator would struggle to balance the power exchange between electrolysis system and network after fault clearance. The power electrolysis systems producing the power cannot be adjusted quick enough. Therefore, only a certain power is allowed to trip, and it is essential for large consumers to remain connected in case of a violation of the allowed voltage band.

Since the electrolysis characteristic is highly dependent on the input voltage, already a slight voltage reduction changes the input power strongly. If the cell voltage drops below the Nernst voltage (about 1.23 V for water electrolysis), the gas production and thus electrolysis process stops completely. Should the input voltage drop quickly to 0.73 p.u., no power can be consumed any more by the electrolysis system. This leads to massive imbalance between power generation and consumption, when several GW of electrolysis capacity are simultaneously affected, while the generation units continue to operate with just slightly reduced power compared to the pre-fault values.

On the hydrogen-side a buffer tank is used to compensate for pressure fluctuations due to downstream processes like a compression. However, oxygen is normally not utilized and simply blown off.

Therefore, during a fault the previously opened blow-off valve on the oxygen-side must close to compensate for a pressure loss which is induced by a stopped gas production. On the hydrogen-side though, the blow-off valve is normally not opened since the produced hydrogen is completely handed over to the buffer tank. Since the closing of the blow-off valve on the oxygen-side takes some seconds, the pressure drop on the oxygen-side is greater than on the hydrogen-side - this is per-se not critical.

However, this scenario can get critical if the current is ramping up again and the oxygen blow-off valve is still in the process of closing. Such an event can lead to a pressure increase on the oxygen-side and therefore to a trip of the electrolysis plant due to exceeding the limit of the pressure on the oxygen-side.

Numerous measures within the plant are required to enable FRT capability, since the plant as a whole must fulfil these requirements. Among these, an oxygen buffer tank can mitigate the above described challenge.

It is therefore an objective of the present invention to improve the fault ride through capabilities of an electrolysis system.

This objective is solved by a method of operating an electrolysis system as stated in claim 1, a control unit to control an electrolysis system as stated in claim 5, an electrolysis system with such a control unit as stated in claim 9, a computer program product as stated in claim 10 and a computer-readable storage medium as stated in claim 11. Advantageous additional embodiments of the invention are disclosed in the respective dependent claims.

According to a first aspect of the invention, a method of operating an electrolysis system after a fault ride through comprise the step of:
providing a control signal to a product valve on the oxygen-side of the electrolysis system to keep the product valve open in order to buffer oxygen provided by the electrolysis system in a buffer tank on the oxygen-side in normal operation of the electrolysis system.

The electrolysis system comprises - as on the hydrogen-side - a buffer tank on the oxygen-side, wherein between the oxygen-outlet and the buffer tank on the oxygen-side the product valve on the oxygen-side is provided.

This leads by keeping the product valve open to a comparable gas volume and therefore an identical trend of the pressure change behaviour on both - hydrogen and oxygen - side.

Furthermore, including a buffer tank within the oxygen downstream side enables a compensation for the critical control behaviour of the blow off valve on the oxygen-side. In this case, the blow-off valve on the oxygen-side and the blow-off valve on the hydrogen-side are not opened during normal operation. Therefore, after a fault ride through, which is followed by a current increase, no opposite behaviour of the gas production and the blow-off control valve positions change on the oxygen-side and hydrogen-side will appear.

Consequently, a trip of the electrolysis plant due to exceeding the limit of the pressure on the oxygen-side which is caused by the oxygen blow-off valve behaviour is prevented.

In an embodiment of the method, the method comprising the steps of:
providing a further control signal to a blow-off valve on the oxygen-side of the electrolysis system to keep the blow-off valve closed after a fault signal of the electrolysis system.

The fault signal is caused by a fault, maybe followed by a fault ride through. Keeping the blow-off valve closed after a fault signal close holds the pressure on the oxygen-side on the same level as on the hydrogen-side. The result is an identical trend of the pressure change behaviour on both - hydrogen and oxygen - side.

In an embodiment of the method, the method comprising the step of:
providing a further control signal to the product valve on the oxygen-side of the electrolysis system to open the product valve, and providing a further control signal to a blow-off valve on the oxygen-side of the electrolysis system to open the blow-off valve.

This allows to keep the pressure in the electrolysis-system on the oxygen-side on the same level as on the hydrogen-side of the electrolysis system.

In an embodiment of the method, at least a product valve on the hydrogen-side of the electrolysis system is at the same time controlled as the product valve on the oxygen-side of the electrolysis system. Thus, the product valve on the hydrogen-side as well as the product valve on the oxygen-side are opened and closed simultaneously to keep the pressure on the oxygen-side on the same level as on the hydrogen-side of the electrolysis system.

According to a second aspect of the invention, a control unit is provided. The control unit for an electrolysis system is configured too.

According to a third aspect of the invention, an electrolysis system with such a control unit is provided.

According to a fourth aspect of the invention, a computer program product comprises code portions that, when executed on a programmable apparatus, for example on control unit, enable the programmable apparatus to carry out steps of a method according to the first aspect of the invention. And according to a fifth aspect of the invention, a computer readable storage medium comprises a computer program product according to the second aspect of the invention.

The programmable apparatus may be a computer or a pro-cessing control unit comprising a processor and a memory and an interface for receiving measured values and parameter settings. The computer program product corresponds to a computer program, at least including software code portions for performing steps of the method according to the invention when run on a programmable apparatus, for enabling the programmable apparatus to per-form functions according to the invention. The computer program may be provided on a computer readable storage medium, i.e., a data carrier, such as a CD, DVD, memory card or other storage medium, stored with data loadable in a memory of the programmable apparatus, wherein the data represents the computer program. As another example, the data carrier may further be a data connection, such as a telephone cable or data cable or a wireless connection.

While not explicitly described, the presented embodiments may be employed in any combination or sub-combination.

The properties, features, and advantages of the invention described above, and the manner in which they are achieved, will become clearer and more clearly understood in connection with the following description of the exemplary embodiments, which are explained in more detail in connection with the drawings, wherein
Fig. 1 schematically illustrates an example of an electrolysis system;
Fig. 2 schematically shows diagrams illustrating fault ride through requirements;
Fig. 3 schematically shows a diagram illustrating an electrolyser polarisation curve;
Fig. 4 further details of the electrolysis system shown in Fig. 1; and

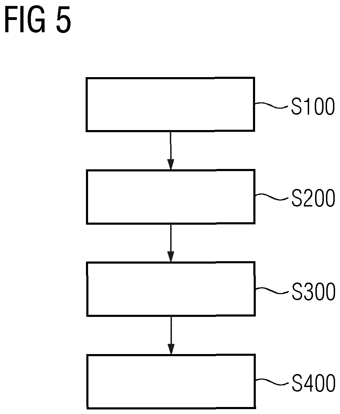

Fig. 5. schematically shows an example of a flowchart of operating the electrolysis system shown in Fig. 1.

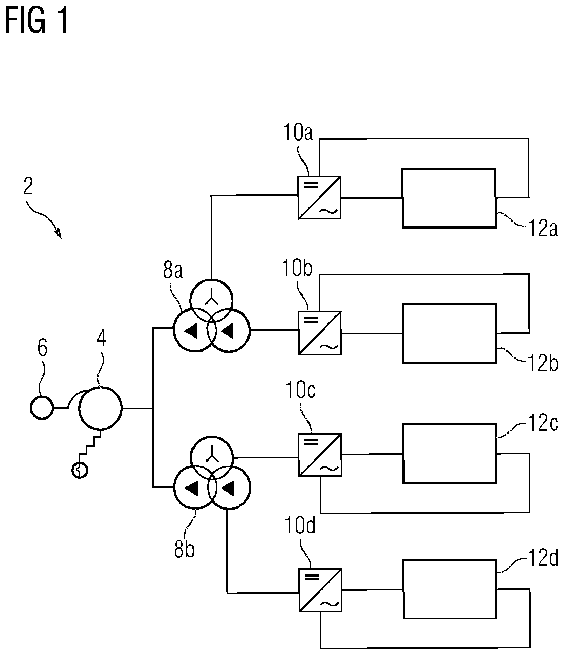

In Fig.1, an example of an electrolysis system 2 is schematically illustrated.

The shown electrolysis system 2 is a 24-pulse electrolysis system and contains an autotransformer 4 with an on-load tap changer.

A PoC 6 connects the electrolysis system 2 to an AC grid (not shown).

The autotransformer 4 secondary side is connected to primary sides of two rectifier transformers 8a, 8b, having their secondary sides connected to the AC input sides of four 6-pulse thyristor rectifier circuits 10a, 10b, 10c, 10d, which connect with their DC output sides to four electrolyser rows 12a, 12b, 12c, 12d, i.e., four parallel rows of electrolyser cell modules. The electrolyser cell modules can be PEM or alkaline cell modules.

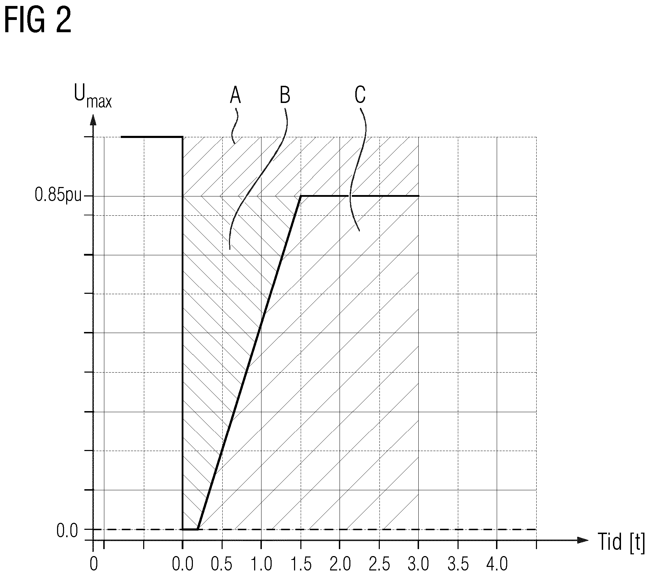

In Fig. 2, a diagram illustrates fault ride through requirements.

Connecting large electrolysis systems 2 to the public grid requires compliance with/the fulfilment of the local grid code requirements. Part of these requirements - especially for large electrolysis systems - is a fault ride through capability. The typical core requirement is to remain fully connected to the grid in case of a temporary voltage dip at the point of connection. The grid operator specifies a curve where the voltage dip is time dependently shown, during which the electrolysis system must remain connected (Area A + B). Longer or deeper voltage dips allow a disconnection of the electrolysis system (Area C). Similar requirements apply for temporary voltage increases.

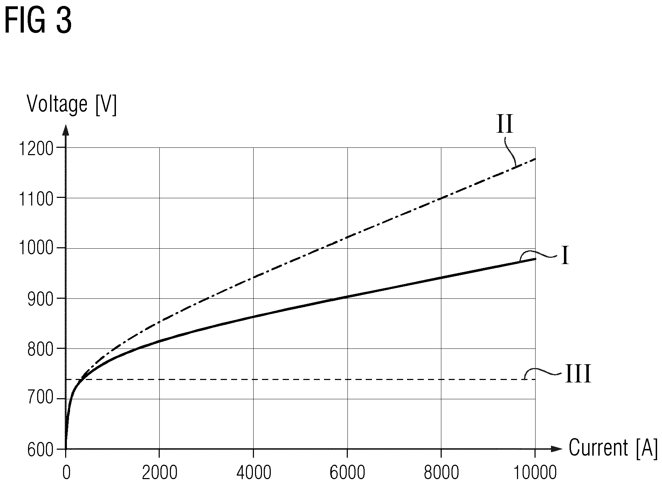

In Fig. 3, a diagram illustrating an electrolyser polarisation curve is schematically shown. A first polarisation curve I shows the polarisation curve of an example electrolyser row 12a, 12b, 12c, 12d for a new electrolyser row 12a, 12b, 12c, 12d, i.e., at its beginning of life. A second polarisation curve II shows the polarisation curve of the same example electrolyser row 12a, 12b, 12c, 12d at the end of its life. At any time during the lifetime of the electrolyser row12a, 12b, 12c, 12d, a lower limit or minimum threshold for hydrogen production III applies.

Since the electrolysis characteristic is highly dependent on the input voltage, already a slight voltage reduction changes the input power strongly. If the cell voltage drops below the Nernst voltage (about 1.23 V for water electrolysis), the gas production and thus electrolysis process stops completely. For the example below, nominal electrolyser system voltage at begin of life is at about 980 V, while the threshold for hydrogen production is in the range of 720 V. Should the input voltage drop quickly to 0.73 piu., no power can be consumed any more by the electrolysis system. This leads to massive imbalance between power generation and consumption, when several GW of electrolysis capacity are simultaneously affected, while the generation units continue to operate with just slightly reduced power compared to the pre-fault values.

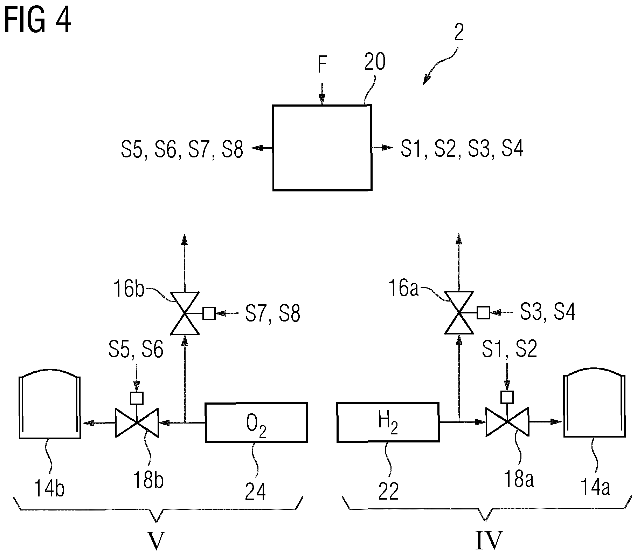

In Fig. 4, a diagram illustrates further details of the electrolysis system 2 shown in Fig. 1.

On the hydrogen-side IV of the electrolysis system 2 a product valve 18a is arranged between a hydrogen-outlet 22 and a buffer tank 14a for hydrogen (H₂). Further, in the present embodiment, a blow-off valve 16a for hydrogen is arranged between the hydrogen-outlet 22 and the product valve 18a.

The blow-off valve 16a as well as the product valve 18a are controlled by a control unit 20. For opening and closing of the blow-off valve 16a and the product valve 18a the control unit 20 provides control signals S1, S2, S3, S4, e.g., control signals S1, S3 for closing, and S2, S4 for opening, for example.

In the same way, on the oxygen-side V of the electrolysis system 2 a product valve 18b is arranged between an oxygen-outlet 24 and a buffer tank 14b for oxygen (O₂). Further, in the same way, in the present embodiment, a blow-off valve 16b for oxygen is arranged between the oxygen-outlet 2 and the product valve 18b.

Also, the blow-off valve 16b as well as the product valve 18b are controlled by the control unit 20. For opening and closing of the blow-off valve 16b and the product valve 18b the control unit 20 provides control signals S5, S6, S7, S8, e.g., control signals S5, S7 for closing, and S6, S8 for opening, for example.

The buffer tank 14b on the oxygen-side V has in the present embodiment a volume of 70 m³. In other embodiments, the volume of the buffer tank 14b can be in the range - nut limited to - of 50 m³ to 100 m³.

The control unit 20 can comprise hardware components and/or software components, which are configured to carry out the following described functions.

The control unit 20 is configured to read in a fault signal F caused by a fault, followed by a fault ride through.

Further, the control unit 20 is configured to provide the control signal S5 to the product valve 18b on the oxygen-side V of the electrolysis system 2 to keep the product valve 18b open in order to buffer oxygen provided by the electrolysis system 2 in a buffer tank 14b in normal operation of the electrolysis system 2.

Moreover, the control unit 20 is configured to provide the control signal S7 to a blow-off valve 16b on the oxygen-side V of the electrolysis system 2 to keep the blow-off valve 16b closed after a fault ride through of the electrolysis system 2.

Further, the control unit 20 is configured to provide the control signal S6 to the product valve 18b on the oxygen-side V of the electrolysis system 2 to open the product valve 18b, and providing a further control signal S8 to a blow-off valve 16b on the oxygen-side V of the electrolysis system 2 to open the blow-off valve 16b in order keep the pressure on the oxygen-side on the same level as on the hydrogen-side of the electrolysis system 2.

Moreover, in the present embodiment, the control unit 20 is configured to control the product valve 18b on the hydrogen-side V of the electrolysis system 2 at the same time as the product valve 18a on the oxygen-side IV of the electrolysis system 2. Further, in the present embodiment, the control unit 20 is also configured to control the blow-off valve 16b on the hydrogen-side V of the electrolysis system 2 at the same time as the blow-off valve 16b on the oxygen-side IV of the electrolysis system 2.

Thus, the product valve 18a on the hydrogen-side IV as well as the product valve 18b on the oxygen-side V, and the blow-off valve 16a on the hydrogen-side IV as well as the blow-off 16b on the oxygen-side V are opened and closed simultaneously to keep the pressure on the oxygen-side on the same level as on the hydrogen-side of the electrolysis system 2.

In Fig. 6, an example of a flowchart of operating the electrolysis system 2 shown.

The method starts with step S100, in which, for example the control unit 20 provides the control signal S5 to the product valve 18b on the oxygen-side V of the electrolysis system 2 to keep the product valve 18b open in order to buffer oxygen provided by the electrolysis system 2 in the buffer tank 14b in normal operation of the electrolysis system 2.

In the next step S200, the control unit 20 reads in a fault signal F of a fault, provided by other components of the electrolysis system 2.

In the next step S300, the control unit 20 provides the control signal S7 to the blow-off valve 16b on the oxygen-side V of the electrolysis system 2 to keep the blow-off valve 16b closed after a fault ride through of the electrolysis system 2.

In the next step S400, after a return to normal operation of the electrolysis system 2, the control unit 20 provides the control signal S6 to the product valve 18b on the oxygen-side V of the electrolysis system 2 to open the product valve 18b, and provides the control signal S8 to a blow-off valve 16b on the oxygen-side V of the electrolysis system (2) to open the blow-off valve 16b in order to keep the pressure on the oxygen-side on the same level as on the hydrogen-side of the electrolysis system 2.

Moreover, in the present embodiment, the control unit 20 controls the product valve 18b on the hydrogen-side V of the electrolysis system 2 at the same time as the product valve 18a on the oxygen-side IV of the electrolysis system 2, and the control unit 20 controls the blow-off valve 16b on the hydrogen-side V of the electrolysis system 2 at the same time as the blow-off valve 16b on the oxygen-side IV of the electrolysis system 2.

Those skilled in the art will recognize that the boundaries between blocks are merely illustrative and that alternative embodiments may merge blocks or impose an alternative composition of functionality upon various blocks. It should be noted that, depending on the embodiment, method steps, although described and illustrated according to a certain sequence or order of steps, may at least partly be carried out in a different order or simultaneously. Other steps may be added and certain steps de-scribed here may be left out.

Although the invention has been illustrated and described in detail by the shown preferred embodiments, the invention is not limited by the disclosed examples and other variations can be derived therefrom by those skilled in the art without departing from the scope of the invention.

## Claims

1. Method of operating an electrolysis system (2) wherein the method comprising the step of:
(S100) providing a control signal (S5) to a product valve (18b) on the oxygen-side (V) of the electrolysis system (2) to keep the product valve (18b) open in order to buffer oxygen provided by the electrolysis system (2) in a buffer tank (14b) on the oxygen-side (V) in normal operation of the electrolysis system (2).

2. The method as claimed in claim 1, wherein the method comprising the step of:
(S300) providing a further control signal (S7) to a blow-off valve (16b) on the oxygen-side (V) of the electrolysis system (2) to keep the blow-off valve (16b) closed after a fault signal (F) of the electrolysis system (2).

3. The method as claimed in claim 1 or 2, wherein the method comprising the step of:
(S400) providing a further control signal (S6) to the product valve (18b) on the oxygen-side (V) of the electrolysis system (2) to open the product valve (18b), and providing a further control signal (S8) to a blow-off valve (16b) on the oxygen-side (V) of the electrolysis system (2) to open the blow-off valve (16b) in keep the pressure on the oxygen-side on the same level as on the hydrogen-side of the electrolysis system (2).

4. The method as claimed in claim 1, 2 or 3, wherein at least a product valve (18a) on the hydrogen-side (IV) of the electrolysis system (2) is at the same time controlled as the product valve (18b) on the oxygen-side (V) of the electrolysis system (2).

5. Control unit (20) for an electrolysis system (2), wherein the control unit (20) is configured to providing a control signal (S5) to a product valve (18b) on the oxygen-side (V) of the electrolysis system (2) to keep the product valve (18b) open in order to buffer oxygen provided by the electrolysis system (2) in a buffer tank (14b) on the oxygen-side (V) in normal operation of the electrolysis system (2).

6. Control unit (20) as claimed in claim 5, wherein the control unit (20) is configured to providing a further control signal (S7) to a blow-off valve (16b) on the oxygen-side (V) of the electrolysis system (2) to keep the blow-off valve (16b) closed after a fault signal (F)of the electrolysis system (2).

7. Control unit (20) as claimed in claim 5 or 6, wherein the control unit (20) is configured to providing a further control signal (S6) to the product valve (18b) on the oxygen-side (V) of the electrolysis system (2) to open the product valve (18b), and to providing a further control signal (S8) to a blow-off valve (16b) on the oxygen-side (V) of the electrolysis system (2) to open the blow-off valve (16b) in order to keep the pressure on the oxygen-side on the same level as on the hydrogen-side of the electrolysis system (2).

8. Control unit (20) as claimed in claim 5, 6 or 7, wherein the control unit (20) is configured to control at least a product valve (18a) on the hydrogen-side (IV) of the electrolysis system (2) is at the same time controlled as the product valve (18b) on the oxygen-side (V) of the electrolysis system (2).

9. Electrolysis system (2) with a control unit (20) as claimed in any of the claims 5 to 8.

10. Computer program product, comprising code portions that, when executed on a programmable apparatus, enable the control unit (20) to carry out steps of a method according to any of the claims 1 to 4.

11. Computer readable storage medium, comprising a computer program product according to claim 10.
